# FASCICULE DE BREVET EUROPEEN

(11) **EP 1 282 485 B1**
(45) Date de publication et mention de la délivrance du brevet: **19.07.2006**
(21) Numéro de dépôt: 01936559.2
(22) Date de dépôt: 17.05.2001
(51) Int. Cl.: B25J 3/04, B25J 13/02

(54) **BRAS DE COMMANDE PARALLELE A DEUX BRANCHES**
STEUERARM MIT PARALLELER STRUKTUR
PARALLEL CONTROL ARM WITH TWO BRANCHES

(30) Priorité: 18.05.2000 FR 0006364
(43) Date de publication de la demande: 12.02.2003
(73) Titulaire: COMMISSARIAT A L'ENERGIE ATOMIQUE, 75752 Paris Cédex 15 (FR)
(72) Inventeur: GOSSELIN, Florian, F-92260 Fontenay aux Roses (FR); RIWAN, Alain, F-94240 L'Hay les Roses (FR)
(74) Mandataire: Ilgart, Jean-Christophe
(86) Numéro de dépôt international: PCT/FR2001/001511
(87) Numéro de publication internationale: WO 2001/087547

(56) Documents cités:
- US-A- 6 047 610
- IWATA H: "PEN-BASED HAPTIC VIRTUAL ENVIRONMENT" PROCEEDINGS OF THE VIRTUAL REALITY ANNUAL INTERNATIONAL SYMPOSIUM,US,NEW YORK, IEEE, vol. SYMP. 1, 18 septembre 1993 (1993-09-18), pages 287-292, XP000457699 cité dans la demande
- PATENT ABSTRACTS OF JAPAN vol. 1995, no. 09, 31 octobre 1995 (1995-10-31) & JP 07 148684 A (TOSHIBA CORP), 13 juin 1995 (1995-06-13)

## Description

Le sujet de cette intervention est un bras de commande comprenant deux branches en parallèle.

Les bras de commande ont pour fonction de répercuter des mouvements qui leur sont infligés par un opérateur en instructions de commande d'un appareillage ou d'un système, généralement un robot distant appelé bras esclave ou une simulation informatique. Lorsque le bras de commande dispose de suffisamment de degrés de liberté, l'opérateur peut le commander en translation et en rotation dans l'espace.

Les bras utilisés en robotique prennent des formes très différentes. Dans la plus traditionnelle, ils sont composés d'un enchaînement de segments reliés entre eux par des articulations ou parfois d'autres genres de jointures : cette disposition est appelée « en série ». Mais des inconvénients sont associés à de tels bras dès que le nombre de segments devient important. Ainsi, les mécanismes situés aux jointures présentent des jeux dont le cumul finit par produire une imprécision notable sur la position de l'extrémité libre du bras. De plus, les moteurs qu'il faut normalement ajouter sur le bras pour commander les états des jointures afin de modifier leur configuration ou au contraire de les maintenir fixes quels que soient les efforts extérieurs qu'elles subissent, et qui sont souvent la partie la plus pesante des bras, sont responsables de moments fléchissants excessifs qui peuvent conduire à renforcer la structure des segments et donc alourdir encore le bras, le rendant incommode à manipuler. Il a été proposé de rejeter les moteurs sur l'embase fixe sur laquelle le bras est monté, mais cette solution implique d'installer des transmissions entre les moteurs et les jointures qu'ils commandent, ce qui n'est pas toujours possible et contribue à rendre le bras complexe.

C'est pourquoi on s'est intéressé, plus récemment dans l'histoire de la robotique, à des constructions utilisant plusieurs bras en parallèle, au nombre de deux ou plus, et dont les extrémités distalés sont reliées. Pour un nombre de degrés de liberté semblable, les branches des bras ainsi constitués sont moins complexes que dans les robots en série, ce qui atténue beaucoup les inconvénients de l'imprécision de la position du bras et du poids des branches. Cependant, ce type de robot souffre de limitations spécifiques. Ils peuvent ainsi être difficiles à commander de façon simple à un état souhaité, en raison de leur complexité cinématique plus grande ; leur domaine de travail est, en général, plus petit qu'avec des bras en série car il est limité par celui des différentes branches en parallèle et par les collisions entre les segments des différentes branches ; enfin, un défaut, corrélé au précédent, est que les singularités, qui sont des configurations que l'on doit éviter car le robot peut y subir des mouvements incontrôlés, sont en général plus nombreuses.

Les singularités correspondent à des disparitions locales des degrés de liberté ou à des mouvements incontrôlés. Ces dernières singularités sont spécifiques aux robots parallèles, mais toutes restreignent le domaine d'utilisation du bras. Cet inconvénient est plus prononcé avec les bras maîtres, qui ne sont pas prévus pour exercer des mouvements répétitifs ou connus à l'avance et que l'on commande à la main, sans se soucier des singularités, qu'on est donc susceptible d'atteindre à l'improviste. C'est pourquoi il faut les limiter tout en les reportant aux extrémités du domaine de travail.

On conclut de ces diverses remarques que les bras en parallèle sont intéressants comme bras maîtres à cause de la commodité qu'il y a à les manier, mais que leurs défauts spécifiques rendent en réalité beaucoup d'entre eux mal appropriés à cette application. L'invention a trait à un agencement particulier de bras en parallèle, dont les avantages principaux sont une réduction importante des singularités et une grande facilité de commande, qui permet d'imposer sans peine le mouvement voulu pour produire un état souhaité.

Ces objectifs sont atteints avec un bras de commande comprenant deux branches s'étendant entre une embase commune et un poignet commun, selon la revendication indépendante. Dans une telle constitution, les porte-poignet permettent de séparer au sein de chacune des deux branches les éléments responsables de la commande en translation de ceux qui sont responsables de la commande des degrés de liberté de rotation. Cette séparation concourt en soi à la réduction des singularités. Le document de l'art antérieur le plus proche est peut-être un article d'Iwata intitulé « Pen-based haptic virtual environment » (IEEE-ICRA 1993, p.287 à 292) qui décrit un robot parallèle à deux branches unies par un poignet mais dépourvues de porte-poignet conforme à l'invention. Ce bras comprend des singularités.

Les branches ont avantageusement des segments articulés entre eux, aux porte-poignet respectifs et à une portion de l'embase par trois axes parallèles ; cette portion de l'embase est alors avantageusement montée tournante sur une portion fixe de l'embase autour d'un axe orthogonal aux axes parallèles précédents, ce qui confère trois degrés de liberté en translation des branches à l'endroit du porte-poignet ; le poignet est alors composé de portions articulées, de façon à posséder deux ou trois degrés de liberté de rotation.

Les moyens pour maintenir constants les angles mentionnés plus haut entre les porte-poignet et les plans fixes peuvent comprendre des transmissions s'étendant sur les branches, et plus précisément des poulies situées sur des axes d'articulation successifs des segments des branches et des courroies tendues en chaîne entre les poulies des axes d'articulation successifs ; les poulies sont généralement libres de tourner sauf les deux dernières, qui sont respectivement fixées au porte-poignet et à une structure immobile par rapport à la base fixe ou au premier corps de chacune des branches.

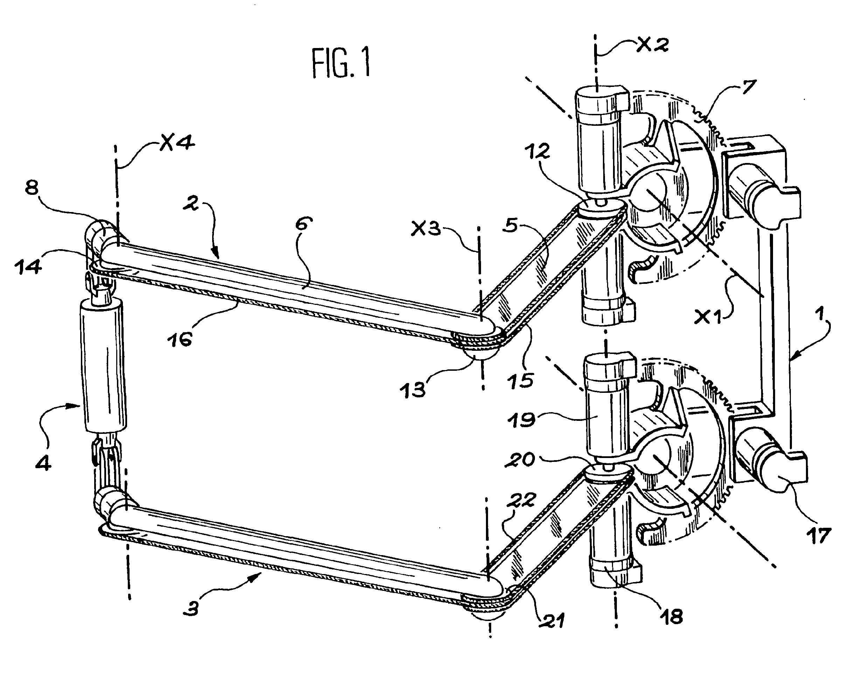

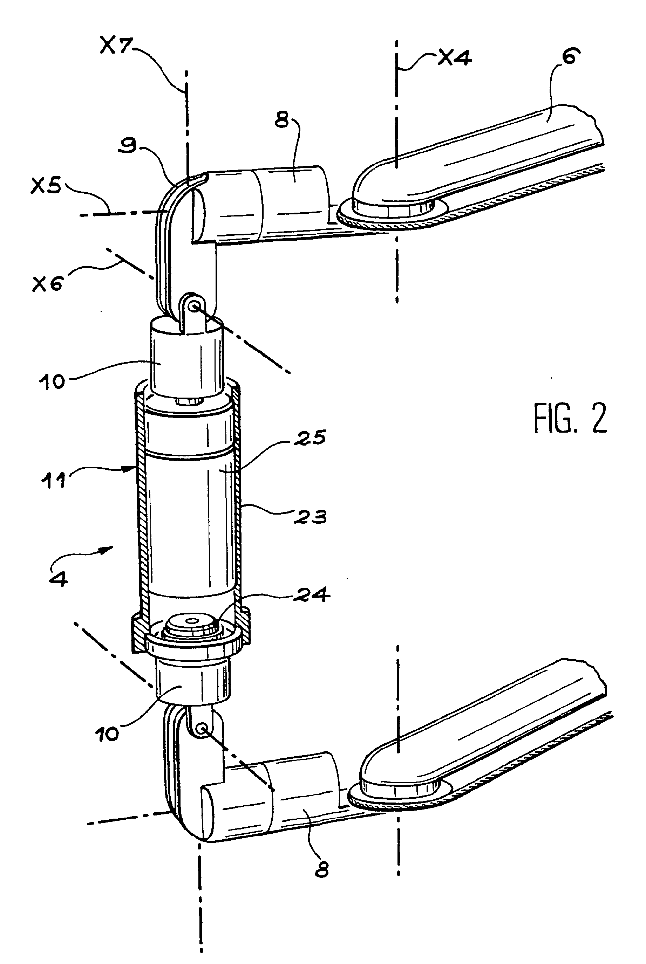

L'invention sera maintenant décrite en liaison aux figures 1 et 2, qui représentent respectivement l'ensemble du bras et le détail du poignet.

Le bras est monté sur une embase 1 fixe et comprend deux branches 2 et 3 disposées de façon quelconque entre cette embase 1 et un poignet 4 qui les relie entre elles. De façon avantageuse, ces deux branches peuvent être superposées. De façon avantageuse, elles peuvent également être semblables. Dans la configuration de référence représentée, où le poignet 4 leur est perpendiculaire, les branches 2 et 3 sont dans des plans parallèles. Chacune des branches comprend un segment de bras 5, un segment d'avant-bras 6, et aussi un corps d'attache 7 formant une embase mobile de raccord à l'embase fixe 1 et un porte-poignet 8 de raccord au poignet 4. Le corps d'attache 7 tourne sur l'embase 1 autour d'un axe X1. Le segment de bras 5 est articulé au corps d'attache 7 et au segment d'avant-bras 6 par des axes d'articulation X2 et X3, respectivement. De manière avantageuse, ces axes seront parallèles entre eux et perpendiculaires à l'axe X1. L'extrémité distale du segment d'avant-bras 6 est articulée au porte-poignet 8 par un axe d'articulation X4, qui sera réalisé de façon avantageuse parallèle aux axes X2 et X3. Les porte-poignet 8 comprennent des extrémités 9 tournant autour d'un axe X5, coïncidant avec une direction d'allongement général des porte-poignet 8, des embouts 10 sont accrochés aux extrémités 9 avec la faculté de tourner sur elles autour d'axes X6 perpendiculaires aux axes X5, et une poignée 11 unit les embouts 10 entre eux en les maintenant en prolongement, tout en pouvant tourner autour d'un axe X7 coaxial à eux. De façon avantageuse, cet axe est orthogonal aux paires d'axes X5 et X6 précédents dans une configuration de référence. La poignée 11 est pivotante autour de l'axe X7 sans changer la distance entre les axes X5 ou les porte-poignet 8, contrairement à la poignée de l'article antérieur qui comprenait une liaison à vis susceptible de faire naître des singularités.

Un élément essentiel de l'invention est que les porte-poignet 8 et leurs axes X5 font un angle constant avec des plans fixes, ici des plans perpendiculaires à l'axe X1 ; si cet angle est droit, les porte-poignets 8 restent même à une orientation fixe dans l'espace. Cela est créé au moyen d'une transmission comprenant, pour chacune des branches 2 et 3, une poulie de maintien 12 coaxiale à l'axe X2 et fixée au corps d'attache 7, une poulie de renvoi 13 coaxiale à l'axe X3 et pouvant tourner librement sur les segments 5 et 6, une poulie de maintien 14 coaxiale à l'axe X4 et fixée au porte-poignet 8, ainsi que deux courroies 15 et 16, tendues respectivement entre les poulies 12 et 13, et 13 et 14 en formant ainsi une chaîne. Quel que soit le mouvement infligé aux segments 5 et 6, l'action des courroies 15 et 16 maintient l'axe X5 dans une direction identique du plan qu'ils forment, puisque la poulie 12 reste fixe.

Les mouvements de la poignée 11 sont produits par des mouvements des segments 5 et 6 et des corps d'attache 7 autour des axes X1, X2 et X3. Les mouvements de translation sont obtenus en déplaçant les porte-poignet 8 des deux branches dans le même sens, les mouvements de rotation, excepté la rotation autour de l'axe de la poignée, en les déplaçant dans des sens opposés. Il en résulte que l'on peut commander cinq degrés de liberté en agissant sur la position des deux porte-poignet 8 avec des moteurs de l'embase ou proches de l'embase. Les branches 2 et 3 restant éloignées l'une de l'autre n'entrent en collision que pour des inclinaisons très importantes de la poignée. D'autre part, les singularités des mouvements ne sont susceptibles d'apparaître que pour des positions de basculement extrême du poignet 4.

On va maintenant décrire le mode d'actionnement du bras. On se sert de moteurs pour renvoyer à l'opérateur des efforts ressentis au niveau du bras esclave ou générés par une simulation informatique. De tels moteurs 17 sont disposés sur l'embase fixe 1 et aident au basculement des corps d'attache 7 autour de l'axe X1 par un engrenage, une courroie ou une autre transmission, des moteurs 18 sont disposés aux axes X2 et aident au basculement des segments de bras 5 par rapport aux corps d'attache 7, d'autres moteurs 19 sont également placés aux axes X2 mais servent en réalité à régler les angles des segments de bras et d'avant-bras 5 et 6 aux axes X3, à l'aide d'une poulie 20 reliée à leur arbre de sortie, d'une poulie 21 reliée au segment d'avant-bras 6 et d'une courroie 22 tendue entre ces poulies. Les poulies 20 et 21 ainsi que la courroie 22 peuvent être remplacées par tout autre dispositif approprié tel qu'une bielle, ce qui correspond à un montage de type parallélogramme bien connu de l'homme de l'art. Il n'est point besoin de placer de moteur aux axes X4, qui sont commandés autrement, pas plus qu'aux axes X5 et X6, puisque les rotations autour de ces axes découlent uniquement des mouvements aux extrémités des segments d'avant-bras 6 ; mais un moteur 25 destiné à la poignée 11 peut être ajouté de manière à commander un degré de liberté de pivotement autour de l'axe X7. De manière avantageuse, le moteur 25 peut être solidaire d'une gaine 23 de préhension de la poignée 11, montée sur un des embouts 10 en liberté de rotation par un roulement 24, alors que l'arbre de sortie du moteur 25 est relié à l'embout 10 opposé. Il peut également être monté sur une embase mobile 7, ce qui nécessite toutefois un dispositif de transmission des efforts du moteur 25 à la poignée.

Des capteurs tels que des codeurs de position angulaire sont associés aux différents moteurs pour mesurer leurs mouvements et indiquer l'état du bras et les commandes imposées, mais ici encore ces techniques sont connues et ne seront pas évoquées dans ce texte. Si un degré de liberté est superflu, on peut avantageusement renoncer à la commande du pivotement de la poignée 11 qui est la plus difficile à produire de façon précise et confortable. Les autres moteurs sont de toute façon portés par l'embase 1 fixe ou par le corps d'attache 7 soutenu directement par elle, si bien qu'ils ne pèsent pas sur les segments 5 et 6, qui peuvent être assez légers en conséquence.

Les moteurs 18 et 19 commandant les bras 5 et les avant-bras 6 et qui sont placés le long de l'axe X2 peuvent être décalés par rapport à cet axe en cas de nécessité pour introduire un réducteur. Ils peuvent également être montés sur l'embase fixe 1 pour peu qu'un dispositif de transmission adéquat jusqu'à l'axe X2, non décrit dans ce document, soit introduit.

L'organe terminal du bras n'est pas forcément une poignée, mais peut être un stylo, une boule, une pince, etc. selon les applications envisagées, dont on peut citer les jeux, les dispositifs de simulation, la télémanipulation, la téléopération ou déplacement à distance pour des industries diverses.

## Revendications

1. Bras de commande comprenant deux branches (2, 3) s'étendant entre une embase commune (1) et un poignet (4) commun, les branches (2, 3) étant articulées à l'embase commune (1) par des axes fixes (X1), **caractérisé en ce qu'**il comprend des porte-poignets disposés entre le poignet (4) et les branches (2, 3), que les branches (2, 3) sont articulées aux porte-poignet (8) par des axes (X4), que les portes-poignet sont articulés au poignet (4) par des axes (X5), et **en ce qu'**il comprend des moyens pour maintenir constants des angles formés par les axes (X5) des portes-poignet et des plans fixes perpendiculaires aux axes fixes (X1).

2. Bras de commande suivant la revendication 1, **caractérisé en ce que** lesdits moyens comprennent des transmissions (12 à 16) s'étendant sur les branches.

3. Bras de commande suivant la revendication 2, **caractérisé en ce que** les transmissions comprennent des poulies (12, 13, 14) situées sur des axes d'articulation successifs (X2, X3, X4) de segments (5, 6) des branches, et des courroies tendues en chaîne sur des paires des axes d'articulation successifs.

4. Bras de commande suivant l'une quelconque des revendications 1 à 3, **caractérisé en ce que** les branches sont mobiles de façon à posséder trois degrés de liberté de translation aux porte-poignet, et le poignet (4) est composé de portions (9, 10, 11) articulées de façon à posséder deux ou trois degrés de liberté de rotation.

5. Bras de commande suivant la revendication 4, **caractérisé en ce que** les portions du poignet (4) sont articulées autour d'axes (X5, X6, X7) orthogonaux entre eux à une configuration de référence.

6. Bras de commande suivant l'une quelconque des revendications 4 ou 5, **caractérisé en ce qu'**une des portions (11) du poignet est pivotante sans changer une distance entre les porte-poignet (8).

7. Bras de commande suivant la revendications 4, **caractérisé en ce qu'**il comprend en plus un moteur de retour d'effort (25) dans le poignet.

8. Bras de commande suivant la revendication 9, **caractérisé en ce qu'**il comprend en plus un moteur de retour d'effort monté sur une portion de l'embase (7) et un dispositif de transmission de cet effort jusqu'à la poignée.

9. Bras de commande suivant l'une quelconque des revendications 1 à 8, **caractérisé en ce que** les branches comprennent deux segments (5, 6) articulés entre eux, au porte-poignet (8) et à une portion de l'embase (7) par trois axes parallèles (X2, X3 , X4) .

10. Bras de commande suivant la revendication 9, **caractérisé en ce que** les segments (5, 6) comprennent des moteurs de retour d'effort (18, 19) portés par l'embase (7) et **en ce que** les embases (7) comprennent des moteurs de retour d'effort (17) portés par la base fixe (1).

11. Bras de commande suivant la revendication 9, **caractérisé en ce que** ladite portion de l'embase est tournante sur une portion fixe de l'embase (1) autour d'un axe orthogonal (X1) auxdits trois axes parallèles.

12. Bras de commande suivant l'une quelconque des revendications 1 à 11, **caractérisé en ce que** les branches sont déformables dans des plans.

13. Bras de commande suivant la revendication 12, **caractérisé en ce que** les plans sont parallèles dans une configuration de référence.

14. Bras de commande suivant la revendication 12 ou 13, **caractérisé en ce que** les branches sont semblables.

## Claims

1. Control arm comprising two branches (2, 3) extending between a common base (1) and a common wrist (4), the branches (2, 3) being articulated to the common base (1) by fixed axes (X1), **characterized in that** it comprises wrist holders positioned between the wrist (4) and the branches (2, 3), that the branches (2, 3) are articulated to the wrist holders (8) by axes (X4), that the wrist holders are articulated to the wrist (4) by axes (X5) and that it comprises means for maintaining constant angles formed by the wrist holder axes (X5) and fixed planes perpendicular to the fixed axes (X1).

2. Control arm according to claim 1, **characterized in that** the said means comprise transmissions (12 to 16) extending on the branches.

3. Control arm according to claim 2, **characterized in that** the transmissions comprise pulleys (12, 13, 14) located on successive articulation axes (X2, X3, X4) of segments (5, 6) of the branches, and tightened belts in series on pairs of successive articulation axes.

4. Control arm according to any ane of claims 1 to 3, **characterized in that** the branches are free to move such that they have three degrees af freedom of translation at the wrist holders, and the wrist (4) is comprised of articulated portions (9, 10, 11) so as to have two or three degrees of freedom in rotation.

5. Control arm according to claim 4, **characterized in that** the portions of the wrist (4) are articulated about axes (X5, X6, X7) that are orthogonal to each other at a reference configuration.

6. Control arm according to either of claims 4 or 5, **characterized in that** one of the portions (11) of the wrist is free to pivot without changing the distance between the wrist holders (8).

7. Control arm according to claim 4, **characterized in that** it also comprises a force feedback motor (25) in the wrist.

8. Control arm according to claim 9, **characterized in that** it also comprises a force feedback motor installed on a portion of the base (7) and a device for transmission of this force to the handle.

9. Control arm according to any one of claims 1 to 8, **characterized in that** the branches comprise two segments (5, 6) articulated with each other, with a wrist holder (8) and with a portion of the base (7) through three parallel axes (X2, X3 and X4).

10. Control arm according to claim 9, **characterized in that** the segments (5, 6) also comprise force feedback motors (18, 19) supported on the base (7) and **in that** the bases (7) comprise force feedback motors (17) supported on the fixed base (1).

11. Control arm according to claim 9, **characterized in that** the said portion of the base is free to rotate about a fixed portion of the base (1) about an axis (X1) orthogonal to the said three parallel axes.

12. Control arm according to any one of claims 1 to 11, **characterized in that** the branches can be deformed in the planes.

13. Control arm according to claim 12, **characterized in that** the planes are parallel in a reference configuration.

14. Control arm according to claim 12 or 13, **characterized in that** the branches are similar.

## Patentansprüche

1. Steuerarm mit zwei Zweigen (2, 3), die sich zwischen einem gemeinsamen Befestigungsteil (1) und einem gemeinsamen Gelenkgriff (4) erstrecken, wobei die Zweige (2, 3) durch fixe Achsen (X1) an dem gemeinsamen Befestigungsteil (1) angelenkt sind,
**dadurch gekennzeichnet, dass** er zwischen dem Gelenkgriff (4) und den Zweigen (2, 3) angeordnete Gelenkgriffhalter umfasst, dass die Arme (2, 3) an den Gelenkgriffhaltern (8) durch Achsen (X4) angelenkt sind, dass die Gelenkgriffhalter an dem Gelenkgriff (4) durch Achsen (X5) angelenkt sind, und **dadurch**, dass er Einrichtungen umfasst, um Winkel konstant zu halten, die gebildet werden durch die Achsen (X5) der Gelenkgriffhalter und fixe Ebenen, die senkrecht sind zu den fixen Achsen (X1).

2. Steuerarm nach Anspruch 1, **dadurch gekennzeichnet, dass** die genannten Einrichtungen über die Zweige verteilte Übertragungseinrichtungen (12 bis 16) umfassen.

3. Steuerarm nach Anspruch 2, **dadurch gekennzeichnet, dass** die Übertragungseinrichtungen in den sukzessiven Gelenkachsen (X2, X3, X4) der Segmente (5, 6) der Zweige angeordnete Riemenscheiben (12, 13, 14) und Riemen umfassen, die kettenförmig über sukzessive Gelenkachsenpaare gespannt sind.

4. Steuerarm nach einem der Ansprüche 1 bis 3, **dadurch gekennzeichnet, dass** die Zweige so beweglich sind, dass sie an den Gelenkgriffhaltern drei Translationsfreiheitsgrade besitzen, und der Gelenkgriff (4) durch gelenkig verbundene Teilstücke (9, 10, 11) so gebildet wird, dass er zwei oder drei Rotationsfreiheitsgrade besitzt.

5. Steuerarm nach Anspruch 4, **dadurch gekennzeichnet, dass** die Teilstücke des Gelenkgriffs (4) um Achsen (X5, X6, X7) herum gelenkig sind, die zueinander und zu einer Referenzkonfiguration rechtwinklig sind.

6. Steuerarm nach einem der Ansprüche 4 oder 5, **dadurch gekennzeichnet, dass** eines der Teilstücke (11) des Gelenkgriffs schwenkbar ist ohne einen Abstand zwischen den Gelenkgriffhaltern (8) zu verändern.

7. Steuerarm nach Anspruch 4, **dadurch gekennzeichnet, dass** er zudem einen Retourkraftmotor (25) im Gelenkgriff umfasst.

8. Steuerarm nach Anspruch 4, **dadurch gekennzeichnet, dass** er zudem einen in einen Teil des Befestigungsteils (7) montierten Retourkraftmotor und eine Übertragungsvorrichtung dieser Kraft bis zum Gelenkgriff umfasst.

9. Steuerarm nach einem der Ansprüche 1 bis 8, **dadurch gekennzeichnet, dass** die Zweige jeweils zwei Segmente (5, 6) umfassen, die durch drei parallele Achsen (X2, X3, X4) gelenkig miteinander, mit dem Gelenkgriffhalter (8) und mit einem Teil des Befestigungsteils (7) verbunden sind.

10. Steuerarm nach Anspruch 9, **dadurch gekennzeichnet, dass** die Segmente (5, 6) durch den Befestigungsteil (7) getragene Retourkraftmotoren (18, 19) umfassen, und **dadurch**, dass die Befestigungsteile (7) durch die fixe Basis (1) getragene Retourkraftmotoren (17) umfassen.

11. Steuerarm nach Anspruch 9, **dadurch gekennzeichnet, dass** der genannte Teil des Befestigungsteils an einem festen Teil der Basis (1) um eine zu den drei genannten parallelen Achsen rechtwinklige Achse (X1) herum drehbar ist.

12. Steuerarm nach einem der Ansprüche 1 bis 11, **dadurch gekennzeichnet, dass** die Zweige in Ebenen verformbar sind.

13. Steuerarm nach Anspruch 12, **dadurch gekennzeichnet, dass** die Ebenen in einer Referenzkonfigurationen parallel sind.

14. Steuerarm nach einem der Ansprüche 12 oder 13, **dadurch gekennzeichnet, dass** die Zweige gleich sind.
